# EUROPÄISCHE PATENTANMELDUNG

(11) **EP 3 967 424 A1**
(43) Veröffentlichungstag der Anmeldung: **16.03.2022**
(21) Anmeldenummer: 21194945.8
(22) Anmeldetag: 05.09.2021
(51) Int. Cl.: B22F 1/00, B22F 3/10, B23K 35/02, B23K 35/30, C23C 24/10

(54) **VERFAHREN ZUM AUFBRINGEN EINER SCHUTZSCHICHT AUF EIN WERKSTÜCK**

(30) Priorität: 09.09.2020 DE 102020123457
(71) Anmelder: Fachhochschule Münster, 48149 Münster (DE)
(72) Erfinder: Schniedermann, Tobias, 48159 Münster (DE); Peterseim, Jürgen, 48565 Steinfurt (DE); Holger, Albrecht, 48249 Dülmen (DE)
(74) Vertreter: Kohlhof, Stephan

(57) **Zusammenfassung**

Verfahren zum Aufbringen einer Schutzschicht (A) auf ein Werkstück (B),
wobei die Schutzschicht zumindest teilweise Partikel aus einer Eisenbasislegierung und einer Nickelbasislegierung umfasst,
das Verfahren umfasst die folgenden Verfahrensschritte:
Bereitstellen einer Pulvermischung (PM), wobei die Pulvermischung (PM) ein erstes Pulver (P1) aus der Nickelbasislegierung und ein zweites Pulver (P2) aus der Eisenbasislegierung umfasst;
Verarbeiten der Pulvermischung (PM) zu einem Einschmelzschlicker (S, St),
Aufbringen des Einschmelzschlickers (S, St) auf das Werkstück (3),
Erhitzen des Einschmelzschlicker (ES, ESt) auf eine Prozesstemperatur (TA) oberhalb einer Solidustemperatur (T1u) des ersten Pulvers (P1) und unterhalb einer Solidustemperatur (T2u) des zweiten Pulvers,
wobei das Erhitzen insbesondere unter Umgebungsluft erfolgt,
Abkühlen des Werkstücks (B) nach einer vorgegeben Einschmelzdauer.

## Beschreibung

Die Erfindung betrifft ein Verfahren zum Aufbringen einer Schutzschicht auf ein Werkstück.

Die EP 1 880 039 B1 betrifft Verfahren zur Beschichtung eines Werkstückes mit einer metallischen Einschmelzlegierung. Als Einschmelzlegierung dient eine Nickelbasislegierung, die mit einem Bindemittel versetzt wird und mit einer Flüssigkeit zu einem flüssigen oder pastösen Einschmelzschlicker vermischt wird. Das Bindemittel weist eine Temperaturbeständigkeit von mehr als 400°C aufweist. Der so erzeugte Einschmelzschlicker wird auf das Werkstück aufgebracht. Das so mit dem Einschmelzschlicker versehene Werkstück wird in einer im Schmelzbereich der Einschmelzlegierung liegenden Temperatur von mehr als 1000°C ausgesetzt, so dass die Einschmelzlegierung eingeschmolzen wird. Als Bindemittelt kann ein Emaillepulver dienen.

Ein Problem bei herkömmlichen Verfahren ist die Schrumpfung beim Einschmelzen der Schicht. Dabei unterliegt die ursprüngliche Pulverbeschichtung beim Einschmelzvorgang einem scheinbaren Volumenrückgang, was zu Rissen in der erzeugten Schicht führen kann. Man spricht auch von dem Schichtvolumen, welches sich im Zuge des Einschmelzvorgangs verkleinert. Der Rissbildung wird bislang durch hohe Einschmelztemperaturen entgegengetreten. Durch die hohe Fließfähigkeit neigt das Schichtmaterial dazu, die Risse selbständig zu schließen.

Problematisch ist ferner, dass bei herkömmlichen Schutzschichten das Fließverhalten der Schichten aufgrund hoher Einschmelztemperaturen zu hoch ist. Die Schichten neigen daher zu Tropfenbildung, was insbesondere an vertikalen ausgerichteten Flächen oder vertikal untenliegenden Flächen z.B. Überhängen nachteilig ist.

Herkömmliche Verfahren lassen zudem das Einschmelzen unter Luftatmosphäre nicht zu.

Es ist Aufgabe der vorliegenden Erfindung, ein verbessertes Verfahren zum Aufbringen einer Schutzschicht auf ein Werkstück bereit zu stellen. Dies wird gelöst durch ein Verfahren sowie ein Werkstück nach den Hauptansprüchen; Ausgestaltungen ergeben sich aus den Unteransprüchen sowie der Beschreibung.

Die Erfindung zeichnet sich insbesondere durch folgende Vorteile aus:
Die Verwendung eines Vakuumofens, eines Schutzgasofens oder eines Induktiongenerators ist nicht erforderlich. Im Vergleich zu herkömmlichen Verfahren tritt keine oder allenfalls für die Funktionserfüllung unerhebliche Schrumpfung der Beschichtung in drei Raumrichtungen mehr auf; vielmehr kann die Beschichtung nun unter Luftatmosphäre verschmelzen und die Schrumpfung der Schicht erflogt nur in einer Raumrichtung, nämlich in Richtung der Schichtdicke.

Es können Bauteile unabhängig von ihrer Geometrie beschichtet werden, insbesondere sind Beschichtungen von Hinterschnitten oder Hohlräumen möglich. Auch können vertikal ausgerichtete Flächen oder vertikal untenliegende Flächen von Werkstücken beschichtet werden.

Der Begriff Nickelbasislegierung bezeichnet dabei eine Legierung, bei der Nickel den massenmäßig größten Bestandteil ausmacht, insbesondere zumindest 50Gew %.

Ein Schmelzintervall des ersten Pulvers liegt insbesondere im Bereich unterhalb von 1200°C.

Eine beispielhafte Nickelbasislegierung umfasst neben dem Hauptbestandteil Nickel insbesondere eine oder mehrere von Cr, B, Si, C, Fe.

Der Begriff Eisenbasislegierung bezeichnet dabei eine Legierung, bei der Eisen den massenmäßig größten Bestandteil ausmacht, insbesondere zumindest 50Gew %.

Ein Schmelzintervall des ersten Pulvers liegt insbesondere im Bereich oberhalb von 1200°C.

Eine beispielhafte Eisenbasislegierung umfasst neben dem Hauptbestandteil Eisen insbesondere eine oder mehrere von Cr, B, Si, C, W, V.

Die Erfindung wird anhand der Figuren näher erläutert; hierin zeigt
- Figur 1: die Verfahrensschritte zur Herstellung eines Einschmelzschlickers;
- Figur 2: die Trocknung des Einschmelzschlickers aus Figur 1, der auf einem Werkstück aufgebracht ist;
- Figur 3: das Eintauchen des Werkstücks aus Figur 2 in einen Emailleschlicker;
- Figur 4: das Werkstück nach Figur 3 mit dem aufgebrachten Emailleschlicker;
- Figur 5: die Trocknung des Emailleschlickers auf dem Werkstück nach Figur 4;
- Figur 6: das Einschmelzen des Einschmelzschlickers auf dem Werkstück nach Figur 5;
- Figur 7: das Entfernen des Emailleschlickers von dem Werkstück nach Figur 6;
- Figur 8: ein Temperaturdiagramm mit Schmelzintervallen der Pulver.

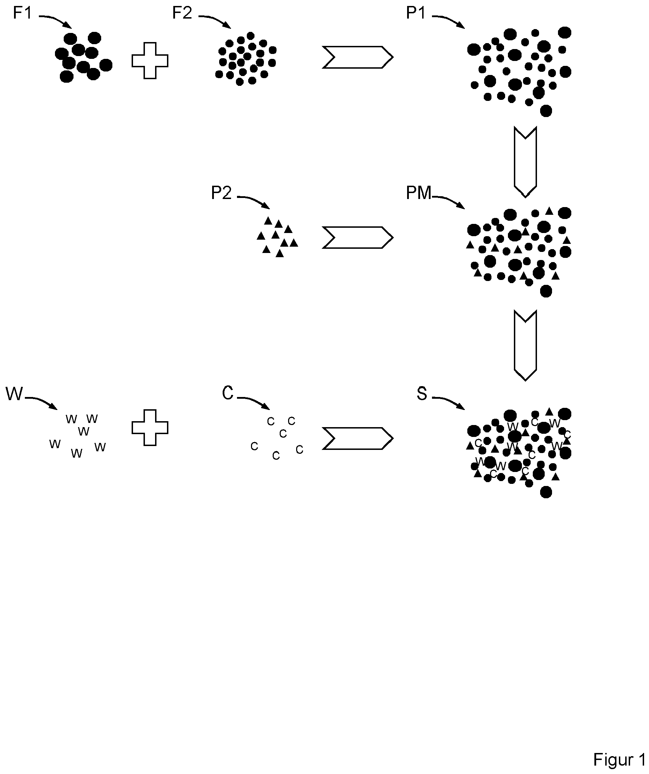

Zunächst wird eine Pulvermischung PM hergestellt, die als Basis für einen Einschmelzschlicker dient (Figur 1). Die Pulvermischung umfasst zwei unterschiedliche Pulver P1, P2. Zur Herstellung eines ersten Pulvers P1 werden zwei Pulverfraktionen F1, F2 miteinander vermischt, wobei die beiden Fraktionen F1, F2 unterschiedliche Partikelgrößen aufweisen. Eine erste Pulverfraktion F1 weist eine erste mittlere Partikelgröße auf, die größer ist als eine zweite mittlere Partikelgröße der zweiten Pulverfraktion F2. Die erste mittlere Partikelgröße beträgt insbesondere 70-180 Mikrometer. Die zweite mittlere Partikelgröße beträgt insbesondere 40-70 Mikrometer.

Durch Verwendung von Pulver unterschiedlicher Partikelgrößen wird erreicht, dass die Packungsdichte im ersten Pulver größer wird. Vergleichbar ist dies mit einer Menge großer Kieselsteine (erste Fraktion), die mit Sand (zweite Fraktion) aufgefüllt ist. Die zweite Fraktion füllt dabei Zwischenraumvolumen zwischen der ersten Fraktion auf, so dass zwischen den Kieselsteinen weniger Luftraum verbleibt. Das Schichtvolumen (einschl. Lufteinschlüsse) ist nur wenig größer das tatsächliche Volumen der Pulverbestandteile.

Das erste Pulver P1 (mit den Fraktionen F1 und F2) wird mit einem zweiten Pulver P2 zur Pulvermischung PM vermischt.

Das erste Pulver P1 ist aus einer Nickelbasislegierung gebildet. Das zweite Pulver P2 ist aus einer Eisenbasislegierung gebildet.

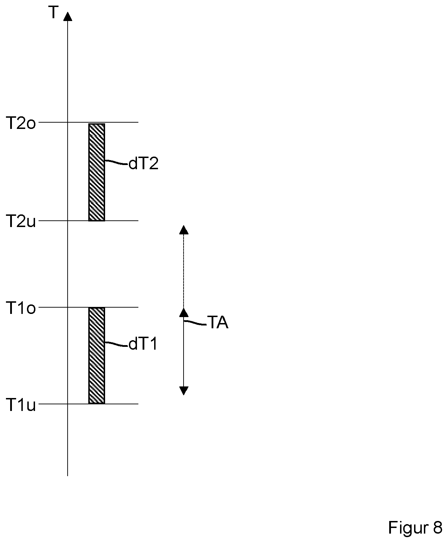

Ein erster Minimalwert (erste Solidustempeatur) T1u des Schmelzintervalls dT1 des ersten Pulvers P1 liegt zwischen 900-1100°C. Ein zweiter Minimalwert (zweite Solidustemperatur) T2u des Schmelzintervalls dT2 des zweiten Pulvers P2 ist höher als der erste Minimalwert T1u. Die Temperaturrelationen sind in der Figur 8 dargestellt. Ergänzend ist auch eine Temperaturrelation denkbar, bei der sich die beiden Schmelzintervalle dT1 und dT2 teilweise überlappen. Mit anderen Worten: Ein erster Maximalwert (erste Liquidustemperatur) T1o des ersten Schmelzintervalls dT1 kann höher sein als die zweite Solidustemperatur T2u.

Die Beschreibung der nachfolgenden zwei Absätze dient lediglich zum Verständnis von Grundlagen und ist nicht Bestandteil der Erfindung.

Angenommen, eine Menge des ersten Pulvers würde auf eine Temperatur innerhalb des Schmelzintervalls dT1 erhitzt werden, so käme es zumindest zum teilweisen Aufschmelzen des ersten Pulvers. Eine Folge daraus wäre eine scheinbare Volumenabnahme dieser Menge aufgrund von Schrumpfung. Durch die verringerte Reibung in Kombination mit der eintretenden Oberflächenspannung fließen die angeschmolzene Pulverkörner aufeinander zu und versuchen sich zu einem großen Tropfen zu vereinigen, was das Schichtvolumen der ersten Menge verringert. Diese Volumenreduktion kann zu einer signifikanten Verkürzung der Seitenflächen des Schichtaufbaus führen, und zwar in allen drei Raumrichtungen.

Der Effekt einer solchen Schrumpfung ist unerwünscht, wenn durch das Pulver schließlich eine geschlossene Schicht ausgebildet werden soll. Denn aufgrund der Schrumpfung können sich Lücken oder Risse in der auszubildenden Schicht bilden. Hierbei verkleinert sich der vom Pulver eingenommen Raum (Schichtvolumen), da Lufteinschlüsse nach und nach verschwinden und das aufgeschmolzene Pulver den zuvor von der Luft eingenommen Raum einnimmt.

Erfindungsgemäß wird der Pulvermischung PM nun eine Mischung mit Cellulose C und Wasser W zugefügt und zu einem Einschmelzschlicker S verrührt. Die Cellulose C wirkt zunächst wie ein Schmierfilm zwischen den Pulvern und die Pulverpartikel können nun aneinander abgleiten. Durch Variation der Mengen von Wasser und Cellulose lässt sich die Viskosität des Einschmelzschlickers S einstellen.

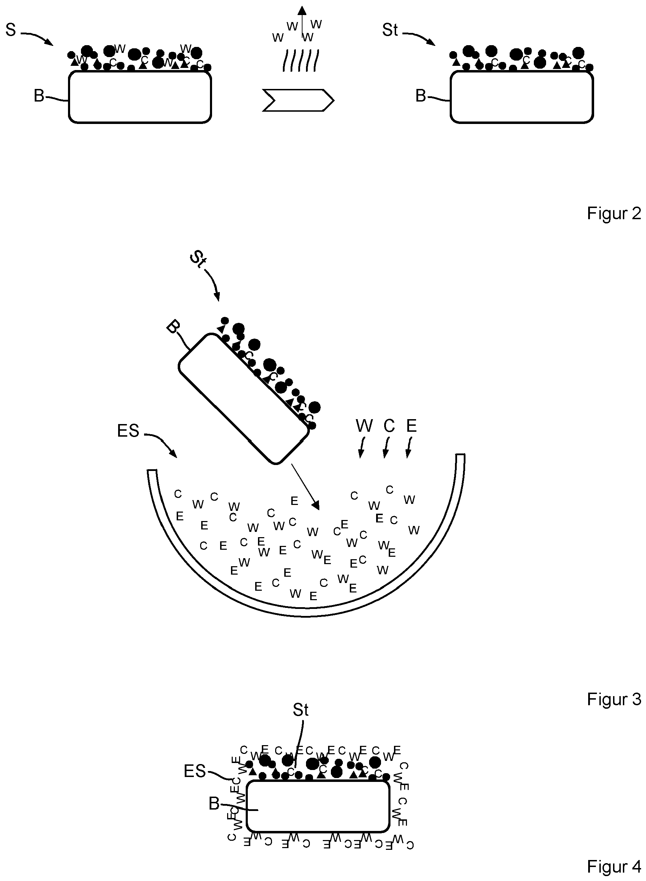

Bei bevorzugter Einstellung der Viskosität lässt sich der Einschmelzschlicker gut formen, ist aber dennoch derart dickflüssig, dass der Einschmelzschlicker nicht selbständig fließt. Nun wird der Einschmelzschlicker in beliebiger Form und Stärke auf ein zu beschichtendes Werkstück B aufgebracht (Figur 2, links). Die Form und die Stärke des Einschmelzschlickers S auf dem Werkstück B ist dabei frei einstellbar. Der Einschmelzschlicker S behält seine Form, auch an Flächen, die vertikal unten angeordnet ist. Dabei haftet der Einschmelzschlicker an einer zu beschichtenden Oberfläche des Werkstücks B. Das Aufbringen des Einschmelzschlickers kann bei Raumtemperatur erfolgen.

Anschließend wird der aufgebrachte Einschmelzschlicker S mitsamt dem Werkstück getrocknet (Figur 2). Die Trocknung erfolgt vorzugsweise unterhalb der Siedetemperatur von Wasser, um eine mechanische Wechselwirkung des andernfalls siedenden Wassers mit der Schlickerschicht zu vermeiden. Nach der Trocknung ergibt sich eine Verbindungstruktur aus Celluloseketten, welche die Partikel der Pulver zusammenhält. Der getrocknete Einschmelzschlicker St ist nun fest an dem Werkstück angebracht. Die Schicht aus Einschmelzschlicker auf dem Werkstück B schrumpft während der Trocknung allenfalls unmerklich und wird von der Cellulose zusammengehalten. Diese Schicht des getrockneten Einschmelzschlickers St weist bereits eine vergleichsweise hohe Stabilität auf.

Die Schicht aus getrocknetem Einschmelzschlicker St wird mit einem Oxidationsschutz versehen. Dieser Oxidationsschutz schützt die Pulver bis zur Vollendung des Einschmelzvorgangs vor Oxidation und ermöglich dabei, dass das Einschmelzen in einem Ofen mit Umgebungsluft durchgeführt werden kann. In einem Schutzgasofen oder in einem Vakuumofen ist der Oxidationsschutz entbehrlich.

Das Werkstück B mit dem getrocknetem Einschmelzschlicker St wird dazu in einen Emailleschlicker ES getaucht (Emaillierung, Figur 3) und anschließend aus dem Tauchbad herausgenommen. Es entsteht auf der getrockneten Schlickerschicht St durch den anhaftenden Emailleschlicker ES eine glasartige Oberfläche, die einen Abschluss gegenüber der Umgebungsluft ausbildet (Figur 4).

Insbesondere wird zur Herstellung des Emailleschlickers ein Emaillepulver E mit Wasser W angerührt.

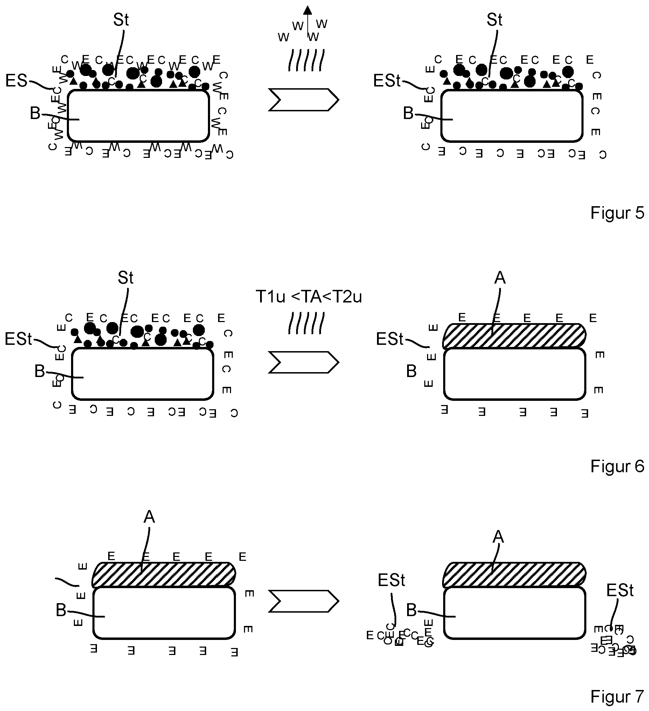

Das Bauteil B mit dem Emailleschlicker ES wird erneut getrocknet (Figur 5), damit das Wasser aus dem Emailleschlicker ES entweicht. Es verbleibt eine getrocknete Emailleschicht ESt. Beim nachfolgenden Einschmelzen kann diese Emailleschicht ESt schrumpfen. Daher muss diese Emailleschicht ESt eine gewisse Schichtdicke ausbilden, damit die Schutzwirkung ausreichend ist und die Schicht nicht gasdurchlässig wird.

Die getrocknete Emailleschicht ESt bildet nun eine geschlossene Schicht aus, die sich auf dem getrockneten Einschmelzschlicker St ausbildet und diesen gasundurchlässig bedeckt. Die Schrumpfung der Emailleschicht wirkt zudem befestigend auf den darunterliegenden Einschmelzschlicker, was einem Fließen des Einschmelzlickers zusätzlich entgegenwirkt.

Das Werkstück B mit dem eingetrockneten Einschmelzschlicker St und der getrockneten Emailleschicht ESt wird nun in einen Ofen eingeführt (Figur 6), in dem eine Prozesstemperatur TA herrscht (Figur 8). Die Prozesstemperatur TA liegt im Schmelzintervall dT1 des ersten Pulvers P1 oder darüber (gestrichelter Bereich), aber in beiden Fällen unterhalb des Schmelzintervalls dT2 des zweiten Pulvers. Dies führt zu einem zumindest teilweisen Aufschmelzen des ersten Pulvers in der Pulvermischung, wobei das zweite Pulver in der Pulvermischung nicht thermisch aufgeschmolzen wird. Nach einer Einschmelzdauer von beispielsweise 10 Minuten wird das Werkstück aus dem Ofen entnommen. Es ist nicht erforderlich, das Werkstück langsam zu erhitzen oder langsam aus der hohen Temperatur abzukühlen. Dies ermöglicht eine hohe Auslastung eines Ofens, da dieser nach Ablauf der Eischmelzdauer sofort für einen weiteren Einschmelzvorgang an weiteren Werkstücken verwendet werden kann.

Versuche haben gezeigt, dass dieser Vorgang zu einer deutlich geringeren Schrumpfung führt als im oben beschriebenen Absatz zum grundlegenden Verständnis. Insbesondere ist es möglich, die Reduktion der Seitenlänge der Menge an Pulvermischung in allen drei Raumrichtungen auf ein akzeptables Minimum zu verringern.

Für diesen Effekt liegt folgender Erklärungsversuch vor: Das einschmelzende erste Pulver neigt zwar zum Fließen und tendiert zur der im oben beschriebenen Absatz beschriebenen Tropfenbildung. Allerdings befindet sich zwischen den Partikeln des ersten Pulvers P1 noch die festen, ungeschmolzenen Partikel des zweiten Pulvers P2. Diese Partikel des zweiten Pulvers vergrößern die Reibung, der die ersten Pulverpartikel aussetzt sind, was deren Fließverhalten entgegenwirkt. Die Tropfenbildung wird somit reduziert, so dass das entstehende Gemisch auch an untenliegenden oder vertikalen Flächen angewendet werden kann, ohne dass ein Heruntertropfen zu befürchten ist.

Insgesamt ergibt sich eine hohe Viskosität im aufgeschmolzenen Zustand, die deutlich höher ist als die Viskosität, die bei einem isolierten Aufschmelzen des ersten Pulvers oder bei einem isolierten Aufschmelzen des zweiten Pulvers auftreten würde.

Die Verwendung einer Eisenbasislegierung zusätzlich zur Nickelbasislegierung ist im vorliegenden Verfahren insbesondere deshalb vorteilhaft, da die Partikel der Eisenbasislegierung aufgrund der vergleichsweise niedrigen angewendeten Prozesstemperatur nicht in den Schmelzzustand übergehen. Vielmehr bleiben die Partikel der Eisenbasislegierung fest und behindern so das Fließen der flüssigen Bestandteile. Dennoch führt das Verfahren dazu, dass beide Pulver (Nickelbasisleigerung und Eisenbasislegierung) schlussendlich eine gemeinsame, gut verbundene Matrix eingehen.

Es ergibt sich nun eine Mischung einerseits mit den zumindest teilweise angeschmolzenen Partikeln des ersten Pulvers und andererseits mit den vollständig festen Partikeln des zweiten Pulvers. Die Partikel des zweiten Pulvers gehen aufgrund der hohen Temperaturen nun teilweise chemisch in Lösung mit den angeschmolzenen Partikeln des ersten Pulvers, ohne dass es zu einem thermisch bedingten Aufschmelzen der Partikel des zweiten Pulvers kommt. Nach Abkühlung unterhalb des ersten Schmelzintervalls entsteht nun eine Matrix aus miteinander verbundenen Partikeln des ersten und des zweiten Pulvers.

Durch eine Vergrößerung des Anteils des zweiten Pulvers kann die Härte und die Verschleißbeständigkeit vorteilhaft beeinflusst werden. Bei der Auswahl der Mengenverhältnisse ist allerdings zu bemerken, dass bei einem zu großen Anteil an zweitem Pulver das chemische Lösen des zweiten Pulvers geringer einsetzt und die entstehende Matrix bröckelig werden kann. Ab einem gewissen Mengenanteil des zweiten Pulvers wird folglich eine ausreichend geschlossene Schutzschicht nicht mehr erreicht.

Während des Einschmelzens schließt die Emaille den Einschmelzschlicker gasdicht ab. Die Metallpartikel schmelzen ohne Sauerstoffeinfluss ein.

Man erhält nun eine eingeschmolzene Nickelbasisphase und eine nicht eingeschmolzene Eisenbasisphase, die sich in dem aufgeschmolzenen Nickelbasisschmelze befindet und dort langsam in chemisch Lösung geht. Die Eisenbasisphase wird an Randbereichen chemisch mit dem Nickelbasis in Lösung gehen, so dass sich dort Bereiche mit Legierungen aus Nickelbasis und Eisenbasis ergibt. Mehrere Stufen und unterschiedliche Phasen ergeben sich in unterschiedlichen Konzentrationen oder Feinheiten.

Anschließend (Figur 7) wird die getrocknete Emailleschicht ESt, die sich inzwischen zu einer Schlacke entwickelt hat, abgenommen. Dies kann durch Abschrecken in kaltem Wasser oder mechanisch nach einer Abkühlung im Sandbett erfolgen.

Als zweites Pulver ist eine Eisenbasislegierung bevorzugt, die Vanadium enthält. Vanadium bildet kugelförmige (globulare) Carbide aus, welche sich durch deren hohe Härte und hohe Verschleißbeständigkeit auszeichnen. Hingegen ist keine Nickelbasislegierung bekannt, in der vergleichbarer Weise Vanadium gebunden ist.

Die Verhältnisse aus erstem Pulver und zweiten Pulver sind insbesondere wie folgt:
Das Mengenverhältnis zwischen erstem Pulver und zweitem Pulver beträgt insbesondere zumindest 2:1.
Das Mengenverhältnis zwischen erster Fraktion und zweiter Fraktion ist insbesondere größer als 1:1.

### Bezugszeichenliste

- A: Schutzschicht
- B: Werkstück
- P1: erstes Pulver
- P2: zweites Pulver
- F1: erste Pulverfraktion des ersten Pulvers
- F2: zweite Pulverfraktion des ersten Pulvers
- PM: Pulvermischung
- C: Cellulose
- W: Wasser
- S: Einschmelzschlicker
- St: getrockneter Einschmelzschlicker
- E: Emaillepulver
- ES: Emailleschlicker
- ESt: Emailleschicht / getrockneter Emailleschlicker

- TA: Prozesstemperatur
- dT1: erstes Schmelzintervall
- dT2: zweites Schmelzintervall
- T1u: erste Solidustemperatur
- T2u: erste Solidustemperatur
- T1o: erste Liquidustemperatur
- T2o: erste Liquidustemperatur

## Patentansprüche

1. Verfahren zum Aufbringen einer Schutzschicht (A) auf ein Werkstück (B), wobei die Schutzschicht (A) zumindest teilweise Partikel aus einer Eisenbasislegierung und einer Nickelbasislegierung umfasst,
das Verfahren umfasst die folgenden Verfahrensschritte:
Bereitstellen einer Pulvermischung (PM), wobei die Pulvermischung (PM) ein erstes Pulver (P1) aus der Nickelbasislegierung und ein zweites Pulver (P2) aus der Eisenbasislegierung umfasst;
Verarbeiten der Pulvermischung (PM) zu einem Einschmelzschlicker (S, St),
Aufbringen des Einschmelzschlickers (S, St) auf das Werkstück (B),
Erhitzen des Einschmelzschlicker (S, St) auf eine Prozesstemperatur (TA) oberhalb einer Solidustemperatur (T1u) des ersten Pulvers (P1) und unterhalb einer Solidustemperatur (T2u) des zweiten Pulvers, wobei das Erhitzen insbesondere unter Umgebungsluft erfolgt,
Abkühlen des Werkstücks (B) nach einer vorgegebenen Einschmelzdauer.

2. Verfahren nach dem vorherigen Anspruch,
wobei vor dem Erhitzen des Einschmelzschlickers (ES, ESt) auf die Prozesstemperatur (TA) eine Oxidationsschutzschicht zumindest auf den Einschmelzschlicker (ES, ESt), welcher auf dem Werkstück (B) angebracht ist, aufgebracht wird.

3. Verfahren nach einem der vorherigen Ansprüche,
wobei das erste Pulver (P1) eine erste Partikelfraktion (F1) und eine zweite Partikelfraktion (F2) umfasst,
wobei die erste Partikelfraktion (F1) eine größere mittlere Partikelgröße aufweist als die zweite Partikelfraktion (F2).

4. Verfahren nach einem der vorherigen Ansprüche,
wobei die Legierung des zweiten Pulvers (P2) Vanadium enthält.

5. Verfahren nach einem der vorherigen Ansprüche,
wobei das Verarbeiten zu einem Einschmelzschlicker (S, St) eine Zugabe von Wasser (W) zur Pulvermischung (PM) umfasst.

6. Verfahren nach einem der vorherigen Ansprüche,
wobei das Verarbeiten zu einem Einschmelzschlicker (S, St) eine Zugabe von Cellulose (C) zur Pulvermischung (PM) umfasst.

7. Verfahren nach einem der vorherigen Ansprüche,
wobei nach dem Erhitzen eine Matrix aus Partikeln des ersten Pulvers (P1) und Partikeln des zweiten Pulvers (P2) vorliegt, wobei die Partikel des ersten Pulvers (P1) chemisch mit den Partikel des zweiten Pulvers (P2) in Lösung übergegangen sind.

8. Verfahren nach einem der vorherigen Ansprüche,
wobei die Oxidationsschutzschicht einen Emailleschlicker (ES) umfasst, der insbesondere durch Vermischen eines Emaillepulvers, Wasser und Cellulose gebildet wird.

9. Verfahren nach einem der vorherigen Ansprüche,
wobei nach dem Erhitzen die Oxidationsschutzschicht vom, insbesondere beschichteten, Werkstück (B) entfernt wird.

10. Werkstück (B), aufweisend eine Schutzschicht (A), welche insbesondere nach einem Verfahren nach einem der vorherigen Ansprüche hergestellt wurde, die Schutzschicht (A) umfasst erste Partikel aus einer Nickelbasislegierung und zweite Partikel aus einer Eisenbasislegierung,
wobei die ersten Partikel und die zweiten Partikel chemisch ineinander gelöst sind.
